# EUROPÄISCHE PATENTANMELDUNG

(11) **EP 0 577 984 A2**
(43) Veröffentlichungstag der Anmeldung: **12.01.1994**
(21) Anmeldenummer: 93109105.2
(22) Anmeldetag: 07.06.1993
(51) Int. Cl.: B22D 41/50, C04B 37/00

(54) **Eintauchausguss mit Schutzhülse und Verfahren zu deren Verbinden**

(30) Priorität: 01.07.1992 DE 4221618
(71) Anmelder: DIDIER-WERKE AG, D-65189 Wiesbaden (DE)
(72) Erfinder: Lührsen, Ernst, W-6208 Bad Schwalbach (DE); Masurat, Dirk, W-6200 Wiesbaden (DE); Parbel, Wilhelm, W-4133 Neukirchen-Vluyn (DE); Pohl, Siegfried, W-6209 Heidenrod (DE); Schermer, Heinz, W-6228 Eltville 1 (DE)
(74) Vertreter: Brückner, Raimund, Dipl.-Ing.

(57) **Zusammenfassung**

An einem glasierten Eintauchausguß (1) soll eine Schutzhülse (3) einfach und sicher festlegbar sein. Die Schutzhülse (3) ist mittels eines getrockneten Silikamaterials auf der Rohglasur (2) des Eintauchausgusses (1) befestigt.

## Beschreibung

Die Erfindung betrifft einen glasierten Eintauchausguß mit einer an diesem angeordneten Schutzhülse sowie ein Verfahren zum Verbinden der Schutzhülse mit dem Eintauchausguß.

Ein derartiger Eintauchausguß ist in der DE 40 03 608 C1 beschrieben. Die Schutzhülse liegt im Betrieb im Gießpulverbereich einer Stahlschmelze. Sie verlängert die Standzeit des Eintauchausgusses, weil sie - anders als der Eintauchausguß - aus einem gegen das Gießpulver bzw. die Schlacke besonders widerstandsfähigem Material, nämlich Zirkonoxid besteht.

Damit die unterschiedliche Wärmedehnung des Eintauchausguß-Materials und der Schutzhülse im Anwendungsfall nicht zu Rissen führt, ist zwischen dem glasierten Eintauchausguß-Material und der Zirkonoxidhülse ein umlaufender Ringspalt von 1 bis 2 mm vorgesehen.

Die Schutzhülse ist mit dem Eintauchausguß mittels eines Kitt- oder Mörtelrings verbunden und/oder durch einen Sicherheitsring an dem Eintauchausguß gesichert.

Der Sicherungsring soll das Abrutschen der Hülse, insbesondere beim Aufheizen im Stahlwerk, verhindern. Der Sicherungsring hat jedoch den Nachteil, daß seine Herstellung und Befestigung einen zusätzlichen Aufwand darstellt und daß in die zwischen ihm und der Schutzhülse bestehende Fuge Gießpulver bzw. Schlacke eindringen kann, wenn der Eintauchausguß nicht tief genug in die Schmelze eingetaucht wird. Außerdem schließt der Ring aus, daß die Schutzhülse bis zur unteren Öffnung des Eintauchausgusses reichen kann.

Aufgabe der Erfindung ist es, einen Eintauchausguß und ein Verfahren der eingangs genannten Art vorzuschlagen, bei dem die Schutzhülse mittels eines getrockneten Silikamaterials auf der Glasur des Eintauchausgusses befestigt ist, wobei die Glasur unter Temperatureinwirkung SiO₂ aus dem Silikamaterial aufnimmt.

Die Glasur des Eintauchausgusses wird - nach wie vor - zumindest beim ersten Aufheizen des Eintauchausgusses im Stahlwerk an sich weich. Jedoch gelangt dabei SiO₂ aus dem Silikamaterial in die Glasur, wodurch diese versteift. Die Glasur nimmt dabei eine Viskosität an, die ausreicht, um ein Abrutschen der Schutzhülse vom Eintauchausguß zu verhindern. Dadurch erübrigt sich ein Sicherungsring. Dies hat nicht nur den Vorteil, daß der damit verbundene Aufwand entfällt, sondern zusätzlich den Vorteil, daß die Schutzhülse bis zur unteren Öffnung des Eintauchausgusses reichen kann.

Als Silikamaterial eignet sich das unter dem Handelsnamen "Fondal" marktbekannte Material der Anmelderin. Dieses besteht überwiegend aus reinem SiO₂. Es wird mit Wasser aufgemahlen. Ein typischer Fondal-Schlicker besteht aus 99 Gew.-% SiO₂.

Das erfindungsgemäße Verfahren zum Verbinden der Schutzhülse mit dem Eintauchausguß zeichnet sich dadurch aus, daß Silikaschlicker in einen Spalt zwischen den glasierten Eintauchausguß und der Schutzhülse eingegossen und getrocknet wird.

Vorzugsweise erfolgt das Trocknen bei einer Temperatur von etwa 110 °C. Dadurch ist die Schutzhülse bis zum Einsatz im Stahlwerk ausreichend fest an dem Eintauchausguß bzw. dessen Glasur festgelegt.

Weitere vorteilhafte Ausgestaltungen der Erfindung ergeben sich aus der folgenden Beschreibung.

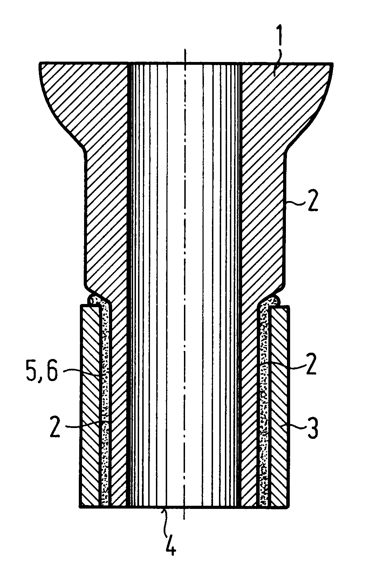

Die Figur zeigt einen Eintauchausguß im Längsschnitt.

Ein Eintauchausguß 1 weist auf seiner ganzen Länge eine Rohglasur 2 auf. An dem Eintauchausguß 1 ist eine Schutzhülse 3 aus ZrO₂ angeordnet. Diese riecht im Ausführungsbeispiel bis zu einer unten liegenden Auslauföffnung 4 des Eintauchausgusses 1. An sich würde es zwar genügen, wenn die Schutzhülse 3 nur in dem Bereich vorgesehen wäre, der im Betrieb im Bereich des Schmelzenspiegels liegt. Da jedoch im Betrieb nicht immer gewährleistet ist, daß der Eintauchausguß 1 so weit in die Schmelze eingefahren wird, daß der Schmelzenspiegel gerade im Bereich der Schutzhülse 3 liegt, ist es günstig, wenn diese bis in die Höhe der Auslauföffnung 4 reicht. Durch die Erfindung ist dies möglich, weil ein unterhalb der Schutzhülse 3 am Eintauchausguß 1 angeordneter Sicherungsring überflüssig ist.

Zwischen der Rahglasur 2 und dem Innenumfang der Schutzhülse 3 besteht ein Ringspalt 5. Dieser ist mit einem Silikamaterial 6, wie es beispielsweise unter dem Handelsnamen "Fondal" der Anmelderin marktbekannt ist, ausgefüllt. Das Silikamaterial 6 ist getrocknet und hält die Schutzhülse 3 von der Herstellung bis zum Einsatz im Stahlwerk sicher am Eintauchausguß 1.

Die Verbindung der Schutzhülse 3 mit dem Eintauchausguß 1 geschieht etwa folgendermaßen:
Auf den mit der Rohglasur 2 versehenen Eintauchausguß 1 wird die vorgefertigte Schutzhülse 3 aufgeschoben. Danach wird in den Ringspalt 5 Silikaschlicker eingegossen und bei etwa 110 °C angetrocknet.

Beim Einsatz im Stahlwerk heizt sich der Eintauchausguß 1 auf einige 100 °C auf. Dabei wird die Rohglasur 2 zunächst weich. In die Rohglasur 2 wandert dabei SiO₂ aus dem getrockneten Silikaschlicker 6. Die Rohglasur 2 wird dadurch so zäh, daß die Schutzhülse 3 nicht nach unten vom Eintauchausguß 1 abrutschen kann. Die Verbindung aus Glasur und Schlicker ist jedoch plastisch genug, um die Wärmedehnungen der Werkstoffe rißfrei kompensieren zu können. Im Zuge des weiteren Gießbetriebs erhärtet die Rohglasur 2 und das Silikamaterial 6, so daß die Schutzhülse 3 dauerhaft fest mit dem Eintauchausguß 1 verbunden ist.

## Patentansprüche

1. Glasierter Eintauchausguß mit einer an diesem angeordneten Schutzhülse,
dadurch gekennzeichnet,
daß die Schutzhülse (3) mittels eines getrockneten Silikamaterials (6) auf der Glasur (2) des Eintauchausgusses (1) befestigt ist, wobei die Glasur unter Temperatureinwirkung SiO₂ aus dem Silikamaterial aufnimmt.

2. Eintauchausguß nach Anspruch 1,
dadurch gekennzeichnet,
daß die Glasur (2) eine Rohglasur ist.

3. Eintauchausguß nach Anspruch 1 oder 2,
dadurch gekennzeichnet,
daß die Schutzhülse (3) bis zur Auslauföffnung (4) des Eintauchausgusses (1) reicht.

4. Verfahren zum Verbinden einer Schutzhülse mit einem Eintauchausguß,
dadurch gekennzeichnet,
daß Silikaschlicker in einen Spalt (6) zwischen dem glasierten Eintauchausguß (1) und der Schutzhülse (3) eingegossen und getrocknet wird.

5. Verfahren nach Anspruch 4,
dadurch gekennzeichnet,
daß der Silikaschlicker auf die ungebrannte Rohglasur (2) des Eintauchausgusses (1) gegossen wird.

6. Verfahren nach Anspruch 4 oder 5,
dadurch gekennzeichnet,
daß der Silikaschlicker bei etwa 110 °C getrocknet wird.
